# FASCICULE DE BREVET EUROPEEN

(11) **EP 2 902 318 B1**
(45) Date de publication et mention de la délivrance du brevet: **01.06.2016**
(21) Numéro de dépôt: 15000009.9
(22) Date de dépôt: 07.01.2015
(51) Int. Cl.: B64C 27/02

(54) **Rotor pour giravion comportant un mécanisme de butée en battement, et giravion**
Rotor für Drehflügelflugzeug, der einen Schlagbegrenzungsmechanismus umfasst, und Drehflügelflugzeug
Rotor for rotorcraft comprising a flappling abutment mechanism, and rotorcraft

(30) Priorité: 31.01.2014 FR 1400271
(43) Date de publication de la demande: 05.08.2015
(73) Titulaire: Airbus Helicopters, 13725 Marignane Cedex (FR)
(72) Inventeur: Massal, Fabien, 13250 Saint Chamas (FR)
(74) Mandataire: GPI & Associés

(56) Documents cités:
- EP-A1- 1 371 554
- FR-A1- 2 551 723
- FR-A1- 2 735 094
- GB-A- 2 073 121

## Description

La présente invention concerne un rotor de giravion, et un giravion muni d'un tel rotor.

L'invention se situe donc dans le domaine technique des rotors de giravion. Plus spécifiquement, l'invention se situe dans le domaine des butées équipant de tels rotors pour limiter le mouvement en battement des éléments sustentateurs portés par ce rotor.

En effet, un giravion comporte usuellement au moins un rotor pour assurer au moins en partie la sustentation voire la propulsion de ce giravion.

Un rotor comprend un moyeu mis en rotation par un mât. Le moyeu porte alors au moins deux ensembles sustentateurs. Par suite, chaque ensemble sustentateur est muni d'une pale reliée au moyeu par au moins un organe de retenue et de mobilité. Chaque pale peut notamment comprendre un élément sustentateur fixé à un manchon ou encore un élément sustentateur muni d'un manchon intégré.

Par exemple, un organe de retenue et de mobilité inclut une articulation dénommée « butée sphérique ». Chaque butée sphérique peut avoir une armature fixée au moyeu et une armature fixée à un manchon, que ce manchon soit intégré ou non à un élément sustentateur.

Les pales sont donc des éléments allongés sensiblement plans, qui sont portés à l'une de leurs extrémités par le moyeu transversalement à son axe de rotation. Le montage des pales sur le moyeu est procuré par des organes de montage individuels des pales sur le moyeu qui incluent les organes de retenue et de mobilité reliant les ensembles sustentateurs au moyeu.

Le moyeu peut être un moyeu à plateaux muni de deux plateaux solidaires d'un mât. Par exemple, une armature d'un organe de retenue et de mobilité est fixée aux plateaux par une broche.

Selon une autre réalisation, le moyeu peut comporter un unique plateau solidaire du mât, ce plateau étant pourvu de bras radiaux comportant des ouvertures. Un organe de retenue et de mobilité est éventuellement positionné dans chaque ouverture, en étant solidarisé au plateau par une armature. Un manchon s'étend alors de part et d'autre du plateau en s'étendant de l'organe de retenue et de mobilité vers un élément sustentateur.

Les organes de montage équipent respectivement chacune des pales à leur emplanture pour autoriser leur manoeuvre par un opérateur. Le montage mobile des pales sur le moyeu permet par exemple à un pilote de giravion d'opérer en vol des variations collectives ou cycliques du pas des pales pour influer sur le comportement du giravion au regard de sa sustentation et/ou de sa propulsion.

La mobilité des pales sur le moyeu autorise leur déplacement en traînée, en pas et en battement vers le haut et vers le bas. Les notions de haut et de bas sont à considérer suivant l'orientation d'extension de l'axe de rotation du rotor. Lorsque le rotor est tournant à vitesse nominale, les pales sont spontanément entraînées vers le haut sous l'effet de la force centrifuge et de la portance. Lorsque le rotor est à l'arrêt, les pales ne subissent aucune force autre que la pesanteur et sont donc entraînées naturellement vers le bas sous l'effet de leur masse.

Le rotor est donc couramment équipé d'un mécanisme de butées limitant le trajet des pales notamment en battement sous l'effet d'efforts extérieurs au giravion.

Selon une réalisation, le mécanisme de butées peut comprendre pour chacune des pales un organe de butée inférieur et un organe de butée supérieur qui forment des obstacles au trajet en battement individuel des pales respectivement vers le bas et vers le haut. Le mécanisme de butées inclut des pistes de butée inférieure et supérieure agencées sur un organe de retenue et de mobilité. Par exemple, une armature d'une butée sphérique porte un patin de butée présentant une piste de butée.

En cas de mouvement en battement indu d'une pale, une piste de butée vient en contact d'un organe de butée ce qui limite de fait le mouvement en battement de cette pale.

Le mécanisme de butées a notamment pour fonction de limiter le mouvement en battement des pales lors du démarrage du rotor, et plus particulièrement en présence de vent. Ce mécanisme de butées peut aussi limiter le mouvement en battement des pales durant une opération de repliage de ces pales. En présence notamment de butées sphériques articulant une pale au moyeu, le mécanisme de butées tend à préserver cette butée sphérique au sol en évitant qu'un mouvement en battement d'une pale en l'absence de force centrifuge induise un décollement des éléments constitutifs de la butée sphérique.

Lorsque le rotor est en rotation, les organes de butée supérieurs ne doivent pas faire obstacle à la mobilité des pales vers le haut. Le mécanisme de butées peut alors prévoir des moyens d'escamotage des organes de butée supérieurs lorsque le rotor est mis en service.

Les organes de butée supérieurs sont alors montés mobiles sur le moyeu entre deux positions. Une première position est une position d'engagement des organes de butée supérieurs en vis-à-vis des pistes de butée correspondantes pour limiter en situation d'arrêt du rotor la mobilité des pales en battement entre les organes de butée inférieurs et les organes de butée supérieurs qui leurs sont affectés. Une deuxième position est une position de dégagement des organes de butée supérieurs, qui autorise en vol une libre mobilité des pales en battement vers le haut.

En résumé, un mécanisme de butées supérieur inclut usuellement un organe de butée par ensemble sustentateur, une piste de butée portée par un ensemble sustentateur et par exemple son organe de retenue et de mobilité, et un moyen d'escamotage pouvant positionner un organe de butée en vis-à-vis d'une piste de butée si nécessaire.

De plus, le mécanisme de butées comprend un anneau de butée basse commun à toutes les pales. Cet anneau de butée basse est mobile dans une gorge.

En vol, une seule pale à la fois peut se déplacer vers le bas, et pousse l'anneau selon une direction opposée. L'anneau n'entrave donc pas le battement des éléments sustentateurs.

Par contre au sol, à faible régime de rotation et à l'arrêt, les ensembles sustentateurs viennent simultanément en contact avec l'anneau, ce qui induit leur immobilisation mutuelle.

Un mécanisme de butées d'une pale comprend donc un anneau de butée basse commun à tous les éléments sustentateurs, et une butée haute escamotable rétractable par élément sustentateur.

Ces deux systèmes de butée sont indépendants et tendent à multiplier les pièces mécaniques dans un espace par nature restreint.

Par ailleurs, l'anneau de butée basse peut présenter une masse non négligeable sur un aéronef de fort tonnage, et générer un balourd à prendre en considération.

Le document FR 2 584 997 présente un système de butée muni d'une butée centrale qui est commune à tous les éléments sustentateurs. Cette butée centrale ne peut pas être éclipsée en vol.

De plus, le système comporte un organe de butée agencé sur chaque organe de retenue et de mobilité. L'organe de butée s'élève en élévation sur une hauteur verticale supérieure à la hauteur de la butée centrale. Dès lors, l'organe de butée comporte un becquet supérieur et un becquet inférieur représentant les limites en battement de l'élément sustentateur correspondant.

Des technologies éloignées font appel non pas à des butées mais à des crochets.

Ainsi, le document US 2 719 593 présente un aéronef muni d'une pluralité de pales articulées à une tête de rotor par notamment une articulation dite de traînée soit « drag hinge » en langue anglaise. Une pale comporte en outre un lien de battement dénommé « flapping link » en langue anglaise.

Pour chaque pale, l'aéronef comprend un mécanisme de retenue en battement pour maintenir la pale dans une position donnée. Ce mécanisme comprend un crochet relié par des bras verticaux au lien de battement, en étant disposé sous la tête du rotor. Le crochet est muni d'une masse pour basculer sous l'effet d'une force centrifuge autour d'un axe de rotation horizontal articulé aux bras verticaux.

Ce crochet est alors engagé autour d'un pion de l'articulation de traînée lorsque le rotor est à l'arrêt, et désengagé de cet orifice lorsque le rotor est mis en rotation.

Le document FR 2 551 723, sur lequel le préambule de la revendication 1 est basé, présente une pale fixée à un organe de retenue et d'articulation, cet organe de retenue et d'articulation étant relié à deux plateaux d'un rotor par une broche.

Ce document présente un mécanisme muni d'une butée comportant une plaque perforée traversée par ladite broche de fixation. Cette butée est aussi solidaire d'une masse pour effectuer une rotation autour de ladite broche sous l'effet de forces centrifuges. Cette butée coopère avec une portée inférieure d'un étrier de commande de pas d'un ensemble sustentateur.

De plus, le mécanisme comporte un crochet apte à être engagé dans la portée inférieure.

Dès lors, le mécanisme comporte une butée rotative et un crochet apte à enserrer une portée inférieure d'un étrier de commande de pas d'un ensemble sustentateur. Ce mécanisme tend alors à remplacer une butée haute par un crochet coopérant avec un étrier de commande de pas.

Le document FR 2 447 856 décrit un rotor muni d'une pluralité de pales.

Chaque pale est munie d'un manchon. Ce manchon comprend un étrier en forme de U qui est articulé à un moyeu muni d'un plateau par un organe de retenu et d'articulation.

De plus, un levier d'actionnement est prévu pour modifier l'angle de pas de la pale. Deux appendices du levier sont alors solidarisés à l'étrier.

Chaque pale est munie d'un mécanisme pour limiter le cas échéant son mouvement en battement. Ce mécanisme inclut une console rigidement fixée au plateau, cette console comprenant une saillie supérieure et une saillie inférieure faisant offices de butées.

En outre, le mécanisme comporte un élément cylindrique mobile selon une direction sensiblement perpendiculaire à l'axe de rotation du rotor et parallèle à l'axe longitudinal de la pale. Cet élément cylindrique est logé dans un orifice d'un appendice du levier d'actionnement. Chaque butée est ainsi fixe et coopère avec un organe mobile d'un levier d'actionnement.

On connait aussi les documents FR 2735094, GB 2073121 et EP 1371554.

Le but de la présente invention est de proposer un rotor muni d'un mécanisme pour limiter le trajet en battement des pales d'un rotor principal d'un giravion.

Selon l'invention, un rotor de giravion est muni d'un moyeu portant une pluralité d'ensembles sustentateurs, chaque ensemble sustentateur ayant un organe de retenue et de mobilité relié à au moins un plateau du moyeu, le rotor ayant un unique mécanisme de butée par ensemble sustentateur pour limiter le mouvement en battement de l'ensemble sustentateur vers le haut et vers le bas dans des conditions prédéterminées. Chaque mécanisme de butée d'un ensemble sustentateur comprend :
- une piste de butée ménagée sur une face dite « face arrière » de l'organe de retenue et de mobilité en regard d'un axe de rotation en élévation du rotor,
- une unique butée cylindrique articulée à au moins un plateau dudit moyeu par un moyen d'articulation pour être uniquement mobile en rotation autour d'un axe de déplacement entre une position dite « position d'engagement » dans laquelle ledit mouvement est limité par la butée et une position dite « position de dégagement » dans laquelle ledit mouvement en battement n'est pas limité par la butée, ladite butée s'étendant sur une hauteur en élévation selon ledit axe de déplacement ainsi que sur une longueur selon un axe dit « axe longitudinal » sensiblement agencé parallèlement à l'envergure de l'ensemble sustentateur équipé dans la position d'engagement et sur une largeur selon un axe dit « axe transversal » perpendiculaire à l'axe de déplacement et à l'axe longitudinal, ladite longueur étant supérieure à ladite largeur, ladite hauteur étant supérieure à ladite longueur,
- une masselotte solidaire en rotation de ladite butée cylindrique et décalée latéralement par rapport audit axe longitudinal dans la position d'engagement,
- un ressort de rappel exerçant un effort sur le mécanisme pour tendre à positionner ladite butée dans la position d'engagement.

Lorsque le rotor n'est pas entraîné en rotation, la butée se trouve dans la position d'engagement. Autrement dit, la butée est en vis-vis de la piste de butée.

Par exemple, la masselotte s'étend latéralement parallèlement à l'axe transversal.

La butée s'élevant en élévation sensiblement parallèlement à la piste de butée, cette butée bloque le battement de l'ensemble sustentateur.

Par contre, le pas de cet ensemble sustentateur peut être modifié. Cet aspect représente un avantage par rapport à certains états de la technique, et notamment certains dispositifs munis de crochets engagés dans un rétreint.

En outre, une unique butée permet de bloquer la pale en battement vers le bas mais aussi vers le haut. En effet, la hauteur de la butée permet de bloquer l'ensemble sustentateur selon deux directions de rotation distinctes. Le mécanisme peut donc être allégé par rapport à un mécanisme nécessitant deux butées spécifiques par exemple.

Lorsque le rotor effectue une rotation et au-delà d'une vitesse de rotation seuil, les efforts centrifuges exercés induisent la rotation de la masselotte autour de l'axe de déplacement. La butée effectue par suite une rotation autour de cet axe de déplacement conjointement avec la masselotte.

La largeur de la butée étant inférieure à sa longueur, ce mouvement rotatif permet d'éloigner la butée de l'organe de retenue et de mobilité. Cet éloignement octroie une liberté de mouvement en battement à l'ensemble sustentateur.

A l'issue de ce mouvement rotatif, la butée est dans une position de dégagement. L'axe transversal de la butée est alors disposé sensiblement selon la longueur d'extension de l'ensemble sustentateur, et donc selon son envergure. L'espace séparant la butée de l'organe de retenue et de mobilité est maximal. L'ensemble sustentateur est donc libre en battement, du moins selon une plage déterminée par le constructeur.

Lors de l'arrêt du mouvement rotatif, les efforts centrifuges exercés sur la masselotte décroissent. Le ressort de rappel permet alors de basculer la butée dans sa position d'engagement.

Ce mécanisme prévoit donc une unique butée ayant un degré de liberté en rotation pour pouvoir être mue entre une position d'engagement et une position de dégagement. L'unique butée présente donc l'avantage d'atteindre une position de dégagement, contrairement à un dispositif muni d'une butée fixe.

Ce mécanisme est relativement simple. Dès lors, le mécanisme peut être agencé sur un rotor dans un espace relativement restreint, et/ ou peut posséder une masse restreinte.

Le rotor peut de plus comporter une ou plusieurs des caractéristiques additionnelles qui suivent.

Par exemple, l'organe de retenue et de mobilité peut être une butée lamifiée, et notamment une butée sphérique.

Une telle butée lamifiée comporte une succession de couches rigides et de couches souples. Une couche souple peut notamment comporter un élastomère. On se référera à la littérature pour obtenir une description détaillée d'une telle butée.

Par ailleurs, la face arrière s'étendant sur une distance dite « distance en élévation » selon un axe parallèle à l'axe de déplacement, cette distance est éventuellement inférieure ou égale à ladite hauteur de la butée.

Cette caractéristique vise à optimiser le blocage en battement de la pale en minimisant la liberté de mouvement en battement de l'ensemble sustentateur.

En outre, le mécanisme comporte un jeu longitudinal entre la piste de butée et la butée dans la position d'engagement.

Ce jeu, non nul et par exemple compris entre un et deux millimètres, permet de laisser une liberté de mouvement à l'ensemble sustentateur, notamment en traînée.

Selon une réalisation, la face arrière de l'organe de retenue et de mobilité représente la piste de butée. Eventuellement, un dépôt de protection peut être appliqué sur cette face arrière.

Selon une alternative, la piste de butée comporte un organe d'usure amovible fixé de manière réversible à la face arrière. L'organe d'usure peut comprendre une plaque d'usure collée ou vissée à la face arrière.

Par ailleurs, le moyen d'articulation peut comporter un tube solidaire de la butée, ce tube étant articulé à au moins un plateau du moyeu. La butée est ainsi solidarisée à un tube articulé à au moins un plateau du moyeu pour être libre d'effectuer un mouvement rotatif. Ce tube s'étend donc en élévation selon l'axe de déplacement.

Par exemple, des moyens de type roulements à billes ou à rouleaux sont interposés entre le tube et chaque plateau traversé par ce tube.

Selon une réalisation, le tube traverse un plateau supérieur et un plateau inférieur du moyeu.

Sur un moyeu muni d'un unique plateau, le tube peut être articulé au moyeu au travers d'une pièce rigide en forme d'équerre exemple.

Indépendamment de la réalisation du moyeu, la masselotte peut alors être solidaire du tube, notamment d'une extrémité de ce tube.

Par ailleurs, le ressort de rappel peut s'étendre entre la masselotte et un plateau du moyeu.

En outre, la butée peut comporter un corps cylindrique comprenant une portion dite « portion arrière » et une portion dite « portion avant » respectivement en regard de l'axe de rotation et de la piste de butée dans la position d'engagement, la portion avant comportant une base ayant une périphérie partiellement arrondie.

Cette périphérie arrondie peut favoriser le dégagement de la butée.

Le cas échéant, la portion arrière est traversée par un tube du moyen d'articulation.

La portion avant peut notamment comporter une base hémicirculaire.

Par ailleurs, lorsque le moyeu comporte un plateau inférieur et un plateau supérieur, ladite butée est favorablement agencée entre le plateau inférieur et le plateau supérieur. L'encombrement du mécanisme et par suite du rotor est minimisé.

La masselotte est alors éventuellement agencée sous le plateau inférieur et/ou au dessus du plateau supérieur. Cette masselotte peut donc être placée sous le plateau inférieur ou au dessus du plateau supérieur, voire être séparée en une première masselotte agencée sous le plateau inférieur et une deuxième masselotte placée au dessus du plateau supérieur.

Lorsque le moyeu comporte un unique plateau présentant des alvéoles accueillant les organes de retenue et de mobilité, chaque butée peut traverser une alvéole du plateau.

Outre un rotor, l'invention vise un giravion qui comporte un tel rotor.

L'invention et ses avantages apparaîtront avec plus de détails dans le cadre de la description qui suit avec des exemples donnés à titre illustratif en référence aux figures annexées qui représentent :
- la figure 1, une vue d'un rotor ayant un moyeu à deux plateaux muni d'un mécanisme selon l'invention,
- la figure 2, un schéma présentant un rotor ayant un moyeu à un plateau muni d'un mécanisme selon l'invention,
- la figure 3, une vue d'un tel mécanisme éclatée,
- la figure 4, une coupe d'une butée, et,
- les figures 5 et 6, des vues explicitant le fonctionnement du mécanisme.

Les éléments présents dans plusieurs figures distinctes sont affectés d'une seule et même référence.

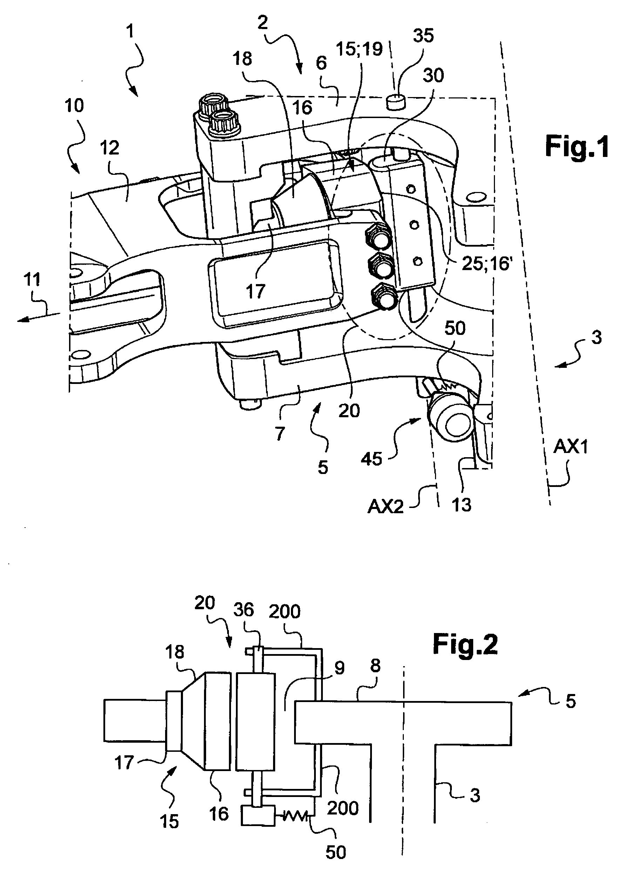

La figure 1 présente un giravion 1 muni d'un rotor 2. Le giravion 1 et le rotor 2 sont partiellement schématisés pour ne pas alourdir la figure 1.

Le rotor 2 est pourvu d'un moyeu 5 solidaire d'un mât rotor 3 en rotation autour d'un axe de rotation AX1. Le moyeu 8 possède au moins un plateau pour porter une pluralité d'ensembles sustentateurs 10.

La réalisation de la figure 1 présente un moyeu muni d'un plateau supérieur 6 et d'un plateau inférieur 7 délimitant en élévation un espace pouvant accueillir partiellement les ensembles sustentateurs 10.

La réalisation de la figure 2 illustre un moyeu muni d'un plateau 8 pourvu d'alvéoles 9 pouvant accueillir partiellement les ensembles sustentateurs 10.

Indépendamment de la réalisation et en référence à la figure 1, chaque ensemble sustentateur 10 peut comprendre un élément sustentateur 11 et un manchon 12 intégré à l'élément sustentateur ou fixé à cet élément sustentateur 11. Le manchon représente l'organe permettant de fixer l'élément sustentateur à un organe de retenue et de mobilité 15 solidarisé au moyeu 5.

Un tel organe de retenue et de mobilité 15 peut être une butée lamifiée 19. L'organe de retenue et de mobilité 15 est alors par exemple muni d'une armature dite « armature externe 16 », d'une armature dite « armature interne 17 » fixée à au moins un plateau du moyeu, et un organe lamifié 18 reliant l'armature externe 16 à l'armature interne 17. L'armature externe 16 possède alors une face dite « face arrière » dirigée vers l'axe de rotation AX1 et une face dite « face avant » fixée à l'organe lamifié 18.

Un tel organe de retenue et de mobilité permet d'articuler un élément sustentateur autour d'un axe de mouvement en battement, d'un axe de mouvement en pas et un axe de mouvement en traînée par exemple.

De plus, le rotor 2 est muni d'un mécanisme 20 pour chaque ensemble sustentateur afin d'au moins limiter le mouvement en battement de cet ensemble sustentateur durant des phases prédéterminées. Notamment, le mécanisme est actif pour au moins limiter ce mouvement de battement en dessous d'une vitesse de rotation seuil du rotor. Par suite, pour chaque pale, le rotor 2 comporte un unique mécanisme 20.

Un mécanisme 20 de butée inclut ainsi une piste de butée 25 ménagée sur la face arrière 16' de l'organe de retenue et de mobilité 15.

Selon la réalisation de la figure 1, cette face arrière 16' représente la piste de butée. Eventuellement, la face arrière peut être recouverte d'un dépôt de protection.

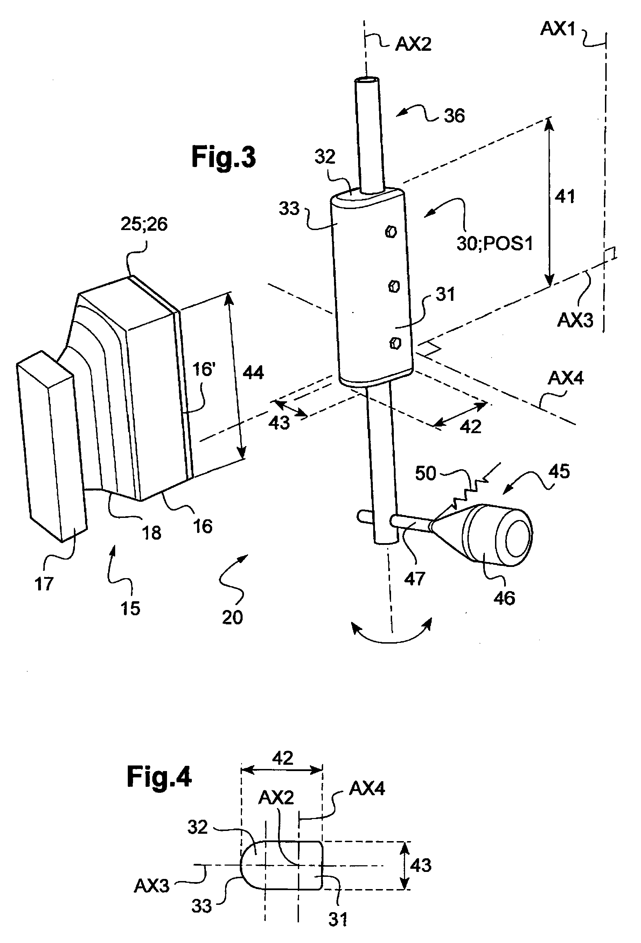

Selon la réalisation de la figure 3, le mécanisme comprend un organe d'usure 26, une plaque par exemple. Cet organe d'usure est alors fixé de manière réversible à l'organe de retenue et de mobilité pour recouvrir la face arrière 16'.

En référence à la figure 1, un mécanisme 20 comporte de plus une unique butée 30 pour interférer par interférence de forme avec la piste de butée 25 pour au moins limiter le battement de l'ensemble sustentateur.

Cette unique butée 30 est de plus mobile en rotation autour d'un axe de déplacement AX2 pour être escamotable. Dans une position dite « position d'engagement » par commodité, la butée 30 est susceptible de bloquer un éventuel mouvement en battement, en butant contre la piste de butée 25. Par suite, pour chaque pale, le rotor 2 comporte un unique mécanisme 20, cet unique mécanisme 20 ayant une unique butée 30 pour limiter le mouvement en battement de l'ensemble sustentateur vers le haut et vers le bas dans des conditions prédéterminées.

A l'inverse, la butée 30 peut effectuer une rotation pour être disposée dans une position dite « position de dégagement » par commodité. Dans la position de dégagement, la butée n'est plus susceptible de bloquer un éventuel mouvement en battement en étant éloignée de la piste de butée 25.

De plus, le mécanisme comporte une masselotte 45 pour commander la rotation de la butée 30. En fonction de la vitesse de rotation du rotor, la force centrifuge déplace la masselotte qui induit une rotation de la butée 30.

En outre, le mécanisme comporte un ressort de rappel 50 s'étendant entre la masselotte 45 et le moyeu 5. Ce ressort de rappel tend à positionner la masselotte et la butée dans la position de dégagement.

La figure 3 présente une vue éclatée d'un mécanisme 20.

La butée 30 est une butée cylindrique. On appelle « butée cylindrique » une butée ayant la forme d'un cylindre, à savoir d'un volume obtenu avec une génératrice parcourant la périphérie d'une base.

En référence à la figure 4, la butée cylindrique peut être décomposée en une portion arrière 31 cylindrique accolée à une portion avant 32 cylindrique. Dans la position d'engagement schématisée sur la figure 3, la portion arrière est en vis-à-vis de l'axe de rotation AX1, alors que la portion avant 32 est en vis-à-vis de l'organe de retenue et de mobilité 15.

La base de la portion arrière 31 peut être parallélépipédique, voire être conformée à une surface du moyeu par exemple.

La base de la portion avant peut posséder une périphérie arrondie, en étant hémicirculaire par exemple.

En référence à la figure 3, la butée cylindrique s'étend en élévation le long de l'axe de déplacement AX2 sur une hauteur 41. Cet axe de déplacement est par exemple parallèle à l'axe de rotation AX1 du rotor.

De plus, la butée cylindrique s'étend en longueur le long d'un axe longitudinal AX3 sur une longueur 42. Cet axe longitudinal AX3 est par exemple orthogonal à l'axe de déplacement AX2 quelle que soit la position de la butée 30. Par contre, l'axe longitudinal AX3 est éventuellement orthogonal à l'axe de rotation et/ou parallèle à un axe d'extension en envergure de l'ensemble sustentateur lorsque la butée 30 est dans la position d'engagement POS1 de la figure 3.

La butée cylindrique s'étend en largeur le long d'un axe transversal AX4 sur une largueur 43. Cet axe transversal AX4 est par exemple orthogonal à l'axe de déplacement AX2 et à l'axe longitudinal quelle que soit la position de la butée. Par contre, l'axe transversal AX4 est éventuellement orthogonal à l'axe de rotation et/ou parallèle à un axe d'extension en envergure de l'ensemble sustentateur lorsque la butée 30 est dans la position de dégagement.

Dès lors, la hauteur 41 de la butée 30 est supérieure à sa longueur 42, cette longueur 42 étant supérieure à sa largeur 43.

De plus, la face arrière 16' s'étendant sur une distance en élévation 44 selon un axe parallèle à l'axe de déplacement AX2, cette distance en élévation 44 est inférieure ou égale à la hauteur 41 de la butée.

Le mécanisme comporte alors un moyen d'articulation 35 pour rendre la butée mobile en rotation par rapport au moyeu.

Ce moyen d'articulation peut comprendre un tube 36 articulé directement ou indirectement à au moins un plateau du moyeu. Ce tube 36 traverse la butée 30 éventuellement de part en part, au niveau de sa portion arrière 31 par exemple.

Le tube 36 peut de plus porter la masselotte 45. La masselotte est déportée latéralement par rapport à la butée 30.

Cette masselotte peut ainsi comprendre un élément pesant 46 relié au tube 36 par une tige 47. On nomme « élément pesant » un organe ayant une masse très supérieure au reste des organes de la masselotte.

La tige 47 s'étend par exemple parallèlement à l'axe transversal AX4, et donc orthogonalement à l'axe de déplacement AX2. Dans la position d'engagement, la masselotte possède alors une angulation de 90° avec l'ensemble sustentateur, et se trouve sensiblement parallèle à cet ensemble sustentateur dans la position de dégagement.

Le ressort de rappel est alors par exemple lié à la tige 47 de la masselotte et à un plateau du moyeu.

Selon la figure 1, le tube est fixé par des organes usuels à deux plateaux du moyeu, ces organes conférant à ce tube un degré de liberté en rotation autour de l'axe de déplacement AX2.

La butée est alors agencée entre le plateau supérieur 6 et le plateau inférieur 7. Eventuellement, la masselotte est par contre positionnée sous le plateau inférieur 7.

Selon la figure 2, la butée est agencée dans une alvéole 9 d'un moyeu à plateau 8 unique. Le tube 36 est par exemple relié au plateau 8 par deux bras 200 s'étendant de part et d'autre de ce plateau 8. Un bras est donc situé au dessus du plateau 8 alors que l'autre bras est situé sous le plateau 8.

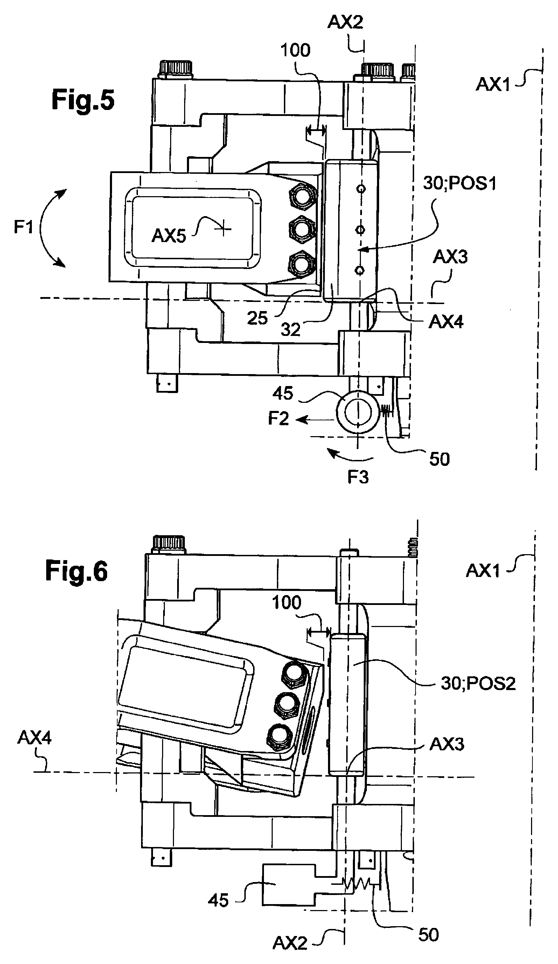

Les figures 5 et 6 illustrent le fonctionnement de la butée. Bien que ce fonctionnement soit illustré avec un moyeu muni de deux plateaux, le fonctionnement décrit s'applique aussi à un moyeu muni d'un plateau.

En référence à la figure 5, la butée se trouve dans la position d'engagement POS1 lorsque le moyeu n'est pas mis en rotation. Un jeu 100 faible sépare éventuellement la portion avant 32 de la butée de la piste de butée 25. On comprend qu'un mouvement en battement, schématisé par la double flèche F1, de l'ensemble sustentateur par rapport à un axe de battement AX5 est impossible.

Lorsque le rotor est mis en rotation, la force centrifuge exercée sur la masselotte 45 selon la flèche F2 induit un mouvement rotatif de cette masselotte selon la flèche F3.

La masselotte et la butée effectuent alors un mouvement rotatif autour de l'axe de déplacement AX2. Le jeu 100 augmente alors compte tenu de la forme particulière de la butée 30.

A partir d'un seuil, la masselotte 45 est dirigée selon un rayon du rotor, soit sensiblement selon un axe d'extension de l'ensemble sustentateur. La rotation de la butée est alors complète. Cette butée 30 se trouve alors dans la position de dégagement POS2 dans laquelle le jeu 100 est maximisé.

Ce jeu 100 permet de garantir l'absence d'interférence entre la butée et l'organe de retenue et de mobilité, en maintenant un jeu minimal même lors du battement de l'ensemble sustentateur.

Le retour dans la position d'engagement lors de l'arrêt du rotor est autorisé par le ressort de rappel 50.

Par ailleurs, on note que pour des actions de maintenance, la masselotte permet d'agir manuellement sur la butée 30 pour libérer les mouvements de la pale.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Rotor (2) de giravion (1) muni d'un moyeu (5) portant une pluralité d'ensembles sustentateurs (10), chaque ensemble sustentateur (10) ayant un organe de retenue et de mobilité (15) relié à au moins un plateau (6, 7, 8) du moyeu (5), ledit rotor (2) ayant un mécanisme (20) de butée par ensemble sustentateur (10) pour limiter le mouvement en battement de l'ensemble sustentateur (10) vers le haut et vers le bas dans des conditions prédéterminées,
**caractérisé en ce que** ledit rotor (2) a un unique mécanisme (20) de butée par ensemble sustentateur (10) et **en ce que** chaque mécanisme (20) de butée d'un ensemble sustentateur (10) comprend :
- une piste de butée (25) ménagée sur une face dite « face arrière (16') » de l'organe de retenue et de mobilité (15) en regard d'un axe de rotation (AX1) en élévation du rotor (2),
- une unique butée (30) cylindrique articulée à au moins un plateau (6, 7, 8) dudit moyeu (5) par un moyen d'articulation (35) pour être uniquement mobile en rotation autour d'un axe de déplacement (AX2) entre une position dite « position d'engagement (POS1) » dans laquelle ledit mouvement en battement est limité par la butée (30) et une position dite « position de dégagement (POS2) » dans laquelle ledit mouvement n'est pas limité par la butée, ladite butée (30) s'étendant sur une hauteur (41) en élévation selon ledit axe de déplacement (AX2) ainsi que sur une longueur (42) selon un axe dit « axe longitudinal (AX3) » sensiblement agencé parallèlement à l'envergure de l'ensemble sustentateur (10) équipé dans la position d'engagement (POS1) et sur une largeur (43) selon un axe dit « axe transversal (AX4) » perpendiculaire à l'axe de déplacement (AX2) et à l'axe longitudinal (AX3), ladite longueur (42) étant supérieure à ladite largeur (43), ladite hauteur (41) étant supérieure à ladite longueur (42),
- une masselotte (45) solidaire en rotation de ladite butée (30) cylindrique et décalée latéralement par rapport audit axe longitudinal (AX3) dans la position d'engagement (POS1),
- un ressort de rappel (50) exerçant un effort sur le mécanisme pour tendre à positionner ladite butée (30) dans la position d'engagement.

2. Rotor selon la revendication 1,
**caractérisé en ce que** ledit organe de retenue et de mobilité (15) est une butée lamifiée (19).

3. Rotor selon l'une quelconque des revendications 1 à 2,
**caractérisé en ce que** ladite face arrière (16') s'étendant sur une distance dite « distance en élévation (44) » selon un axe parallèle à l'axe de déplacement (AX2), ladite distance en élévation (44) est inférieure ou égale à ladite hauteur (41).

4. Rotor selon l'une quelconque des revendications 1 à 3,
**caractérisé en ce que** ledit mécanisme (20) comporte un jeu longitudinal (100) entre ladite piste de butée (25) et ladite butée (30) dans la position d'engagement (POS1).

5. Rotor selon l'une quelconque des revendications 1 à 4,
**caractérisé en ce que** ladite face arrière (16') représente ladite piste de butée (25).

6. Rotor selon l'une quelconque des revendications 1 à 4, **caractérisé en ce que** ladite piste de butée (25) comporte un organe d'usure (26) amovible fixé de manière réversible à ladite face arrière (16').

7. Rotor selon l'une quelconque des revendications 1 à 6,
**caractérisé en ce que** ledit moyen d'articulation (35) comporte un tube (36) solidaire de ladite butée (30), ce tube (36) étant articulé à au moins un plateau (6, 7, 8) du moyeu (5).

8. Rotor selon la revendication 7,
**caractérisé en ce que** ladite masselotte (45) est solidaire dudit tube (36).

9. Rotor selon l'une quelconque des revendications 1 à 8,
**caractérisé en ce que** ledit ressort de rappel (50) s'étend entre ladite masselotte (45) et un plateau (7, 8) dudit moyeu (5).

10. Rotor selon l'une quelconque des revendications 1 à 8,
**caractérisé en ce que** ladite butée (30) comporte un corps cylindrique comprenant une portion dite « portion arrière (31) » accolée à une portion dite « portion avant (32) » respectivement en regard de l'axe de rotation (AX1) et de la piste de butée (25) dans la position d'engagement (POS1), la portion avant (32) comportant une base ayant une périphérie (33) partiellement arrondie.

11. Rotor selon la revendication 10,
**caractérisé en ce que** la portion avant (32) comporte une base hémicirculaire.

12. Rotor selon l'une quelconque des revendications 1 à 11, **caractérisé en ce que** ledit moyeu (5) comportant un plateau inférieur (7) et un plateau supérieur (6), ladite butée (30) est agencée entre le plateau inférieur (7) et le plateau supérieur (6).

13. Rotor selon la revendication 12,
**caractérisé en ce que** ladite masselotte (45) est agencée sous le plateau inférieur (7) et/ou au dessus du plateau supérieur (6).

14. Giravion (1),
**caractérisé en ce que** ledit giravion (1) comporte un rotor (2) selon l'une quelconque des revendications 1 à 13.

## Patentansprüche

1. Rotor (2) eines Drehflügelflugzeugs (1) mit einer Nabe (5), die eine Mehrzahl von Trägereinheiten (10) trägt, wobei jede Trägereinheit (10) ein Rückhalte- und Mobilitätselement (15) aufweist, das mit mindestens einer Platte (6, 7, 8) der Nabe (5) verbunden ist, wobei der Rotor (2) einen Anschlagsmechanismus (20) pro Trägereinheit (10) aufweist, um die Schlagbewegung der Trägereinheit (10) nach oben und nach unten unter vorbestimmten Bedingungen zu begrenzen,
**dadurch gekennzeichnet, dass** der Rotor (2) einen einzigen Anschlagsmechanismus (20) pro Trägereinheit (10) aufweist, und dadurch, dass jeder Anschlagsmechanismus (20) einer Trägereinheit (10) aufweist:
- eine Anschlagsfläche (25), die auf einer "rückseitige Fläche (16')" genannten Fläche des Rückhalte- und Mobilitätselements (15) gegenüber einer vertikalen Drehachse (AX1) des Rotors (2) angeordnet ist,
- einen einzigen zylinderförmigen Anschlag (30), der an mindestens einer Platte (6, 7, 8) der Nabe (5) mit einem Gelenk (35) angelenkt ist, um nur drehbeweglich um eine Verschiebungsachse (AX2) zwischen einer "Eingriffsstellung (POS 1)" genannten Stellung, in der die Schlagbewegung durch den Anschlag (30) begrenzt ist, und einer "freien Stellung (POS2)" genannten Stellung, in der die Bewegung nicht durch den Anschlag begrenzt ist, zu sein, wobei der Anschlag (30) sich über eine vertikale Höhe (41) entlang der Verschiebungsachse (AX2) sowie über eine Länge (42) entlang einer "Längsachse (AX3)" genannten Achse erstreckt, die im Wesentlichen parallel zu der Spannweite der Trägereinheit (10) in ihrer Eingriffsstellung (POS1) und über eine Breite (43) entlang einer "Querachse (AX4)" genannten Achse, die senkrecht zu der Verschiebungsachse (AX2) und der Längsachse (AX3) verläuft, angeordnet ist, wobei die Länge (42) größer ist als die Breite (43), und wobei die Höhe (41) größer als die Länge (42) ist,
- ein Ausgleichsgewicht (45), das drehfest mit dem zylinderförmigen Anschlag (30) verbunden und seitlich gegenüber der Längsachse (AX3) in der Eingriffsstellung (POS1) versetzt ist,
- eine Rückholfeder (50), die auf den Mechanismus eine Kraft ausübt, um den Anschlag (30) in der Eingriffsstellung zu positionieren.

2. Rotor nach Anspruch 1,
dadurch gekenzazeichnet, dass das Rückhalte- und Mobilitätselement (15) ein geschichteter Anschlag (19) ist.

3. Rotor nach einem der Ansprüche 1 bis 2,
**dadurch gekennzeichnet, dass** die rückseitige Fläche (16') sich über eine "vertikale Strecke (44)" genannte Strecke entlang einer zur Verschiebungsachse (AX2) parallelen Achse erstreckt, wobei die vertikale Strecke (44) kleiner oder gleich der Höhe (41) ist.

4. Rotor nach einem der Ansprüche 1 bis 3,
**dadurch gekennzeichnet, dass** der Mechanismus (20) ein Längsspiel (100) zwischen der Anschlagsfläche (25) und dem Anschlag (30) in der Eingriffsstellung (POS1) aufweist.

5. Rotor nach einem der Ansprüche 1 bis 4,
**dadurch gekennzeichnet, dass** die rückwärtige Fläche (16') die Anschlagsfläche (25) aufweist.

6. Rotor nach einem der Ansprüche 1 bis 4,
**dadurch gekennzeichnet, dass** die Anschlagsfläche (25) ein abnehmbares Abnutzungselement (26) aufweist, das lösbar an der rückwärtigen Fläche (16') befestigt ist.

7. Rotor nach einem der Ansprüche 1 bis 6,
**dadurch gekennzeichnet, dass** das Gelenk (35) ein Rohr (36) aufweist, das mit dem Anschlag (30) fest verbunden ist, wobei das Rohr (36) an mindestens einer Platte (6, 7, 8) der Nabe (5) angelenkt ist.

8. Rotor nach Anspruch 7,
**dadurch gekennzeichnet, dass** das Ausgleichsgewicht (45) mit dem Rohr (36) fest verbunden ist.

9. Rotor nach einem der Ansprüche 1 bis 8,
**dadurch gekennzeichnet, dass** die Rückholfeder (50) sich zwischen dem Ausgleichsgewicht (45) und einer Platte (7, 8) der Nabe (5) erstreckt.

10. Rotor nach einem der Ansprüche 1 bis 8,
**dadurch gekennzeichnet, dass** der Anschlag (30) einen Zylinderkörper aufweist mit einem "hinterer Bereich (31)" genannten Bereich, der an einen "vorderer Bereich (32)" genannten Bereich anschließt, die jeweils gegenüber der Drehachse (AX1) und der Anschlagsfläche (25) in der Eingriffsstellung (POS1) angeordnet sind, wobei der vordere Bereich (32) eine Basis aufweist mit einem teilweise abgerundeten Umfang (33).

11. Rotor nach Anspruch 10,
**dadurch gekennzeichnet, dass** der vordere Bereich (32) eine halbkreisförmige Basis aufweist.

12. Rotor nach einem der Ansprüche 1 bis 11,
**dadurch gekennzeichnet, dass** die Nabe (5) eine untere Platte (7) und eine obere Platte (6) aufweist, wobei der Anschlag (30) zwischen der unteren Platte (7) und der oberen Platte (6) angeordnet ist.

13. Rotor nach Anspruch 12,
**dadurch gekennzeichnet, dass** das Ausgleichsgewicht (45) unter der unteren Platte (7) und/oder über der oberen Platte (6) angeordnet ist.

14. Drehflügelflugzeug (1),
**dadurch gekennzeichnet, dass** das Drehflügelflugzeug (1) einen Rotor (2) gemäß einem der Ansprüche 1 bis 13 aufweist.

## Claims

1. A rotor (2) of a rotorcraft (1) provided with a hub (5) bearing a plurality of lift assemblies (10), each lift assembly (10) having a retention and mobility member (15) connected to at least one plate (6, 7, 8) of the hub (5), said rotor (2) having one abutment mechanism (20) per lift assembly (10) to limit the upward and downward flapping movement of the lift assembly (10) under predetermined conditions,
**characterised in that** said rotor (2) has a single abutment mechanism (20) per lift assembly (10), and **in that** each abutment mechanism (20) of a lift assembly (10) comprises:
- an abutment track (25) formed on a face referred to as "rear face (16')" of the retention and mobility member (15) facing an axis of rotation (AX1) in elevation of the rotor (2),
- a single cylindrical abutment (30) articulated to at least one plate (6, 7, 8) of said hub (5) by an articulation means (35) so as to be solely mobile in rotation about an axis of displacement (AX2) between a position referred to as "engagement position (POS1)", in which said flapping movement is limited by the abutment (30), and a position referred to as "disengagement position (POS2)", in which said movement is not limited by the abutment, said abutment (30) extending over a height (41) in elevation along said axis of displacement (AX2) and also over a length (42) along an axis referred to as "longitudinal axis (AX3)" substantially arranged parallel to the span of the fitted lift assembly (10) in the engagement position (POS 1) and over a width (43) along an axis referred to as "transverse axis (AX4)" perpendicular to the axis of displacement (AX2) and to the longitudinal axis (AX3), said length (42) being greater than said width (43), said height (41) being greater than said length (42),
- a fly weight (45) integral in rotation with said cylindrical abutment (30) and offset laterally relative to said longitudinal axis (AX3) in the engagement position (POS1),
- a return spring (50) which exerts a force on the mechanism to tend to position said abutment (30) in the engagement position.

2. A rotor according to Claim 1,
**characterised in that** said retention and mobility member (15) is a laminated abutment (19).

3. A rotor according to any one of Claims 1 to 2,
**characterised in that**, said rear face (16') extending over a distance referred to as "distance in elevation (44)" along an axis parallel to the axis of displacement (AX2), said distance in elevation (44) is less than or equal to said height (41).

4. A rotor according to any one of Claims 1 to 3,
**characterised in that** said mechanism (20) comprises a longitudinal clearance (100) between said abutment track (25) and said abutment (30) in the engagement position (POS1).

5. A rotor according to any one of Claims 1 to 4,
**characterised in that** said rear face (16') represents said abutment track (25).

6. A rotor according to any one of Claims 1 to 4,
**characterised in that** said abutment track (25) comprises a removable wearing element (26) reversibly fastened to said rear face (16').

7. A rotor according to any one of Claims 1 to 6,
**characterised in that** said articulation means (35) comprises a tube (36) integral with said abutment (30), this tube (36) being articulated to at least one plate (6, 7, 8) of the hub (5).

8. A rotor according to Claim 7,
**characterised in that** said fly weight (45) is integral with said tube (36).

9. A rotor according to any one of Claims 1 to 8,
**characterised in that** said return spring (50) extends between said fly weight (45) and a plate (7, 8) of said hub (5).

10. A rotor according to any one of Claims 1 to 8,
**characterised in that** said abutment (30) comprises a cylindrical body comprising a portion referred to as "rear portion (31)" adjoined to a portion referred to as "front portion (32)" respectively facing the axis of rotation (AX1) and the abutment track (25) in the engagement position (POS1), the front portion (32) comprising a base having a partially rounded periphery (33).

11. A rotor according to Claim 10,
**characterised in that** the front portion (32) comprises a semicircular base.

12. A rotor according to any one of Claims 1 to 11,
**characterised in that**, said hub (5) comprising a lower plate (7) and an upper plate (6), said abutment (30) is arranged between the lower plate (7) and the upper plate (6).

13. A rotor according to Claim 12,
**characterised in that** said fly weight (45) is arranged beneath the lower plate (7) and/or above the upper plate (6).

14. A rotorcraft (1),
**characterised in that** said rotorcraft (1) comprises a rotor (2) according to any one of Claims 1 to 13.
